# EUROPÄISCHE PATENTSCHRIFT

(11) **EP 4 288 252 B1**
(45) Veröffentlichungstag und Bekanntmachung des Hinweises auf die Patenterteilung: **01.01.2025**
(21) Anmeldenummer: 21805350.2
(22) Anmeldetag: 02.11.2021
(51) Int. Cl.: B25J 9/16, G05B 19/41

(54) **SYSTEM ZUR VEREINZELUNG UND IDENTIFIZIERUNG VON ARTIKELN**
SYSTEM FOR SEPARATING AND IDENTIFYING ARTICLES
SYSTÈME DE SÉPARATION ET D'IDENTIFICATION D'ARTICLES

(30) Priorität: 04.02.2021 AT 500712021
(43) Veröffentlichungstag der Anmeldung: 13.12.2023
(73) Patentinhaber: Knapp AG, 8075 Hart bei Graz (AT)
(72) Erfinder: STEINBAUER, Christian, 8075 Hart bei Graz (AT); MATHI, Franz, 8075 Hart bei Graz (AT); PUNTIGAM, Wolfgang, 8075 Hart bei Graz (AT); PENDL, Marc, 8075 Hart bei Graz (AT)
(74) Vertreter: Schwarz & Partner Patentanwälte GmbH
(86) Internationale Anmeldenummer: PCT/AT2021/060400
(87) Internationale Veröffentlichungsnummer: WO 2022/165545

(56) Entgegenhaltungen:
- EP-B1- 2 477 914

## Beschreibung

Die Erfindung betrifft ein System zur Vereinzelung und Identifizierung von Artikeln, umfassend eine Quellposition zum Bereitstellen von Artikeln, bevorzugt in Behältern, ein abführendes Förderelement zum Abführen von identifizierten, vereinzelten Artikeln, eine Handhabungseinheit zur Verbringung von Artikeln von der Quellposition in Richtung des abführenden Förderelements, eine Sensoreinheit zur Detektion der Position und/oder Lage der Artikel an der Quellposition, wobei die Handhabungseinheit dazu ausgebildet ist, die Artikel an der Quellposition gemäß der von der Sensoreinheit erkannten Position und/oder Lage aufzunehmen, und eine Identifikationseinheit, die dazu ausgebildet ist, die von der Handhabungseinheit in Richtung des abführenden Förderelements verbrachten Artikel zu identifizieren.

Es ist bekannt, dass Artikel in Quellbehältern gelagert bzw. transportiert werden und zu einem späteren Zeitpunkt vereinzelt werden sollen, beispielsweise um eine bestimmte Anzahl an Artikeln in einen Zielbehälter zum Versand oder ähnlichem umzulagern. Um diesen Prozess zu automatisieren, werden Handhabungseinheiten, d.h. Roboter mit Greiffunktion, eingesetzt, die einzelne Artikel zur Vereinzelung aus den Quellbehältern aufnehmen. Zur eindeutigen Identifikation der aufgenommenen Artikel sind insbesondere die im Folgenden beschriebenen Verfahren bekannt.

Die EP2477914B1 offenbart ein gattungsgemäßes System und ein Verfahren zum Vereinzeln und Kommissionieren von Artikeln. Dabei werden Artikel, die auf einer ersten Transporteinrichtung angeliefert werden, durch einen ersten Sensor in der Position erfasst und mithilfe einer Handhabungseinrichtung an eine zweite Transporteinrichtung überführt, wobei der Artikel während der Überführung an einer Erfassungseinrichtung zur Identifikation vorbeigeführt wird. Nicht identifizierbare Artikel werden auf einer Ablagezone abgelegt, in anderer Position neu aufgenommen und nochmals an der Erfassungseinrichtung zur Identifikation vorbeigeführt.

Hierbei hat es sich als nachteilig erwiesen, dass Artikel, die aus diversen Gründen durch die Erfassungseinrichtung nicht identifizierbar sind, das System blockieren. Artikel werden beispielsweise wegen eines beschädigten Barcodes trotz mehrmaliger Ablage in der Ablagezone und positionsveränderter Wiederaufnahme in einer Endlosschleife immer wieder erfolglos vor die Erfassungseinrichtung gehalten. Die Handhabungseinheit ist daher ständig beschäftigt, wenn ein nicht identifizierbarer Artikel vorliegt, wodurch die Förderung von weiteren Artikeln für eine bestimmte Zeitspanne de facto zum Stilltand kommt. Durch eine Erweiterung des Verfahrens, bei der nicht identifizierbare Artikel nach einer Anzahl von Fehlversuchen auf eine weitere, nicht weiter beschriebene Fehlerzone gebracht wird, kann der beschriebene Nachteil nur geringfügig abgemildert werden.

Ein besonderer Nachteil ist daher die begrenzte Geschwindigkeit der Handhabungseinrichtung, da ein nicht identifizierbarer Artikel die Handhabungseinrichtung relativ lange belegt. Es sind hier Durchsatzraten von nur wenigen hundert Artikel pro Stunde erreichbar, insbesondere dann, wenn Artikel über die Ablagezone geführt werden müssen.

Aus der US10438034B2 ist ein System bekannt, bei welchem Produkte von einem ersten anliefernden Fördersystem zur Identifikation einzeln durch eine Wahrnehmungseinrichtung fallengelassen werden. Die Produkte werden danach von einem primären Transportsystem aufgefangen und parallel zum anliefernden Fördersystem in entgegengesetzter Richtung zu einem Ausschleusepunkt transportiert, wo nicht identifizierte Produkte über Ausschleusung in Richtung anliefernden Fördersystem wieder der Wahrnehmungseinrichtung zugeführt werden. Eine ähnliche Lösung wird auch von dem Unternehmen Soft Robotics angewandt.

Auch hier hat es sich als nachteilig erwiesen, dass Artikel, die aus diversen Gründen nicht durch die Wahrnehmungseinrichtung identifizierbar sind, das System blockieren. Artikel werden beispielsweise wegen eines beschädigten Barcodes in einer Endlosschleife immer wieder erfolglos im System kreisen. Da die nicht identifizierbaren Produkte immer in den anliefernden Produktstrom gemischt werden, sinkt die Durchsatzrate an erfolgreich identifizierten Produkten reziprok mit den kreisenden nicht identifizierbaren Produkten. Es muss in regelmäßigen Abständen die Produktzufuhr unterbrochen werden, und die kreisenden Produkte vom System entfernt werden.

Gleichzeitig ist auch die Mischung der nicht identifizierbaren Produkte mit neu angelieferten Produkten ein Problem, da die neuen Produkte bereits zu einer anderen Produktart bzw. Charge zugeordnet sind und mit kreisenden Produkten der vorhergehenden Produktart bzw. Charge vermischt werden. Bei der Anwendung im Bereich der Kommissionierung ist es zudem nachteilig, dass Auftragsziele auf kreisende nicht identifizierbare Produkte undefiniert lange warten müssen.

Die US 2018/345324 A1 beschreibt ein Sortiersystem zum Identifizieren und Vereinzeln von Artikeln. Bei diesem System gibt es einen "Hauptförderer", von dem aus Pakete zu einer von mehreren Vereinzelungsstationen verbracht werden sollen, was durch das Ansteuern von verschiedenen Rollenförderern erfolgt. Weiters ist ein Verfahren zur Identifizierung bzw. zur Steuerung der Handhabungseinheit an einer Vereinzelungsstation offenbart, wobei diese Identifizierung erfolgt, noch bevor die Pakete von der Handhabungseinheit aufgenommen werden.

Es ist daher die Aufgabe der Erfindung, ein System zur Vereinzelung und Identifizierung von Artikeln zu schaffen, welches die eingangs erläuterten Nachteile überwindet.

Diese Aufgabe wird durch ein System zur Vereinzelung und Identifizierung von Artikeln gelöst, umfassend eine Quellposition zum Bereitstellen von Artikeln, bevorzugt in Behältern, ein abführendes Förderelement zum Abführen von identifizierten, vereinzelten Artikeln, eine Handhabungseinheit zur Verbringung von Artikeln von der Quellposition in Richtung des abführenden Förderelements, eine Sensoreinheit zur Detektion der Position und/oder Lage der Artikel an der Quellposition, wobei die Handhabungseinheit dazu ausgebildet ist, die Artikel an der Quellposition gemäß der von der Sensoreinheit erkannten Position und/oder Lage aufzunehmen, und eine Identifikationseinheit, die dazu ausgebildet ist, die von der Handhabungseinheit in Richtung des abführenden Förderelements verbrachten Artikel zu identifizieren, wobei das abführende Förderelement einen Positionsförderer umfasst, welcher dazu ausgebildet ist, den Artikel zu einer ersten Position zu fördern, wenn dieser von der Identifikationseinheit identifiziert werden konnte, und den Artikel zu einer zweiten Position zu fördern, wenn dieser von der Identifikationseinheit nicht identifiziert werden konnte, wobei die Artikel an der zweiten Position getrennt von den Artikeln an der Quellposition vorliegen, wobei die zweite Position in einem Griffbereich der Handhabungseinheit angeordnet ist und die Handhabungseinheit dazu ausgebildet ist, einen an der zweiten Position vorliegenden Artikel nochmals aufzunehmen und über die Identifikationseinheit zum Positionsförderer zu verbringen.

Das erfindungsgemäße System hat den Vorteil, dass ein besonders schnell arbeitendes Vereinzelungs- und Identifikationssystem geschaffen wird, bei dem nicht identifizierbare Artikel jedoch nicht mit noch unidentifizierten, unvereinzelten Artikeln an der Quellposition vermengt werden. Dadurch bleiben alle Artikel, die zumindest einmal durch die Identifikationseinheit verbracht wurden, vereinzelt und ständig verfolgbar, unabhängig vom Ergebnis der Identifizierung.

Gegenüber der EP2477914B1 hat die Erfindung insbesondere den Vorteil, dass das Verfahren wesentlich schneller ablaufen kann, da die Artikel nach Fehlversuchen nicht von der Handhabungseinheit auf einem Beistelltisch abgestellt, von einer anderen Position aufgegriffen und nochmals durch die Identifikationseinheit verbracht werden müssen. Durch den der Identifikationseinheit nachgelagerten Positionsförderer wird erfindungsgemäß erzielt, dass die Handhabungseinheit während des Identifikationsvorgangs frei beweglich bleibt und auch nicht für die identifikationsabhängige Vorsortierung zuständig ist, die durch den Positionsförderer übernommen wird.

Gegenüber der US10438034B2 hat das erfindungsgemäße System den Vorteil, dass nicht identifizierbare Artikel nicht mit neu zugeführten Artikeln vermischt werden, d.h. gemäß der Erfindung bleiben einmal vereinzelte Artikel auch vereinzelt, um einerseits Chargennummern nicht zu vermengen und andererseits auch die Anzahl von Fehlversuchen bei der Identifizierung mitzuzählen, um diese Artikel gegebenenfalls frühzeitig aus dem Kreislauf zu nehmen.

Besonders bevorzugt ist die Handhabungseinheit dazu ausgebildet, den von der Quellposition aufgenommenen Artikel an einer Freigabeposition freizugeben, die in Bewegungsrichtung des Artikels vor der Identifikationseinheit liegt, und nach der Freigabe des Artikels unmittelbar zur Aufnahme eines neuen Artikels in Richtung der Quellposition zu verfahren, wenn sich kein Artikel an der zweiten Position befindet, oder zur Aufnahme eines zuvor nicht identifizierbaren Artikels zur zweiten Position zu verfahren, um diesen Artikel aufzunehmen und abermals zur Identifikationseinrichtung zu verbringen. Dadurch kann das Verfahren so schnell wie möglich durchlaufen werden, ohne dass die Handhabungseinheit unnötig lange warten müsste, beispielsweise auf das Ergebnis der Identifizierung. Mit dieser Ansteuerung der Handhabungseinheit können Durchsatzraten von ca. 1.500 Artikel pro Stunde erreicht werden, im Gegensatz zu nur wenigen hundert Artikel pro Stunde wie im Stand der Technik.

Um die Artikel möglichst umfassend abzutasten und damit möglichst genau zu identifizieren, weist die Identifikationseinheit einen Eingangsbereich und einen von diesem beabstandeten Ausgangsbereich auf, wobei der Eingangsbereich bevorzugt über dem Ausgangsbereich angeordnet ist. Der Eingangsbereich und der von diesem beabstandete Ausgangsbereich ermöglichen einen räumlich ausgedehnten Erfassungsbereich, wodurch insbesondere ein dreidimensionales Bild des Artikels aufnehmbar und/oder eine Aufnahme von Identifizierungsmerkmalen an schwer zugänglichen Stellen ermöglicht wird.

Weiters ist bevorzugt, wenn die Handhabungseinheit, die Identifikationseinheit und der Positionsförderer derart zueinander angeordnet sind, dass ein von der Handhabungseinheit freigegebener Artikel durch die Identifikationseinheit fällt oder rutscht und nach der Identifikationseinheit auf dem Positionsförderer zu liegen kommt. Dies ermöglicht einen besonders schnellen Identifikationsvorgang, da der Artikel die Identifikationseinheit schwerkraftgetrieben durchschreiten kann, ohne dass es einer gesonderten Fördereinrichtung bedarf, welche den Artikel durch die Identifikationseinheit schleust. In weiteren Ausführungsformen könnte ein von der Handhabungseinheit freigegebener Artikel auch anders durch die Identifikationseinheit gefördert werden, insbesondere durch die Identifikationseinheit geschoben werden, beispielsweise mittels eines sogenannten Pushers.

Bevorzugt ist, wenn die Identifikationseinheit zumindest einen Einzelsensor, besonders bevorzugt zumindest zwei Einzelsensoren, aufweist, die beispielsweise unterschiedlich orientierte Kameras, Scanner, insbesondere Barcodescanner, oder RFID-Leser sind. Durch mehrere Einzelsensoren kann der Artikel insbesondere von verschiedenen Richtungen und/oder auch auf verschiedene Arten identifiziert werden. Beispielsweise können optische Kameras den Artikel aus zumindest zwei unterschiedlichen Richtungen aufnehmen und/oder es können Einzelsensoren unterschiedlicher Typen eingesetzt werden, wie z.B. ein Barcodescanner in Kombination mit einer optischen Kamera und/oder einem RFID-Leser. Je nach Ausführungsform kann es jedoch ausreichend sein, nur einen Einzelsensor vorzusehen.

In einer besonders bevorzugten Ausführungsform umfasst das erfindungsgemäße System eine Steuereinheit mit einem Zähler, der dazu ausgebildet ist, die Anzahl der Identifikationsversuche eines jeweiligen nicht identifizierbaren Artikels aufzuzeichnen. In dieser Ausführungsform kann insbesondere vorgesehen werden, dass die Steuereinheit, der Positionsförderer und/oder die Handhabungseinheit dazu ausgebildet sind, einen nicht identifizierbaren Artikel auf eine dritte Position zu verbringen oder diesem eine vorbestimmte Identifikation zuzuweisen, wenn die Anzahl der vom Zähler gezählten Identifikationsversuche einen vorbestimmten Wert erreicht. Dadurch kann insbesondere verhindert werden, dass ein nicht identifizierbarer Artikel auf unbestimmte Zeit im System zirkuliert und so unnötige Ressourcen in Anspruch nimmt, beispielsweise wenn ein Barcode am Artikel beschädigt ist. Die dritte Position kann eine sogenannte Sonderbehandlungsposition sein, von wo aus der Artikel ausgemustert wird oder manuell durch einen Operator identifiziert wird. Die vorbestimmte Identifikation kann beispielsweise eine Kennung mit dem Inhalt "nicht identifizierbar" sein. In anderen Fällen könnte die Aufzeichnung der Identifikationsversuche alternativ oder zusätzlich zu statistischen Zwecken dienen, beispielsweise um festzustellen, welche Artikel schwer identifizierbar sind, wonach beispielsweise die Identifikationseinrichtung an diese Artikel angepasst werden kann.

Um die Chancen für folgende Identifikationsversuche zu erhöhen, kann die Handhabungseinheit dazu ausgebildet sein, einen von der zweiten Position aufgenommenen Artikel in einer anderen Lage an die Identifikationseinheit freizugeben als Artikel, die von der Quellposition aufgenommen wurden.

Die Sensoreinheit kann in zwei bevorzugten Ausführungsformen vorgesehen werden. In der ersten bevorzugten Ausführungsform hat die Sensoreinheit ein Blickfeld, in welchem sich aufzunehmende Artikel an der Quellposition befinden, wobei eine weitere, d,h, zweite, Sensoreinheit vorgesehen ist, die ein weiteres, d.h. zweites, Blickfeld aufweist, in welchem die zweite Position liegt. Dies hat den Vorteil, dass die Sensoreinheiten fokussierte Blickfelder aufweisen können, wodurch die Position und/oder Lage der Artikel besonders genau bestimmbar ist. In der zweiten bevorzugten Ausführungsform hat die Sensoreinheit ein Blickfeld, in welchem sich sowohl aufzunehmende Artikel an der Quellposition als auch die zweite Position am Positionsförderer befinden. Dies hat den Vorteil, dass nur eine Sensoreinheit vorgesehen werden muss. Die Segmentierung des Bildes kann softwareseitig erfolgen, beispielsweise durch die Steuereinheit.

Der Positionsförderer kann in unterschiedlichen Varianten vorgesehen werden. In einer ersten Variante kann der Positionsförderer dazu ausgebildet sein, Artikel von einer Nullposition, an welcher die Artikel nach der Identifikationseinheit am Positionsförderer zu liegen kommen, entweder zur ersten Position oder zur zweiten Position zu fördern. In dieser Variante durchschreitet der Artikel am Weg zur ersten Position nicht die zweite Position, d.h. die erste Position und die zweite Position liegen ausgehend von der Nullposition in unterschiedlichen Richtungen.

Beispielsweise kann in dieser Variante ein einziges Förderband zum Verbringen der Artikel von der Nullposition sowohl zur ersten Position als auch zur zweiten Position vorgesehen werden, wobei das Förderband in entgegengesetzte Richtungen bewegbar ist. Die erste und die zweite Position liegen hierbei beispielsweise auf unterschiedlichen Seiten der Nullposition. In anderen Ausführungsformen kann der Positionsförderer einen Scheibenförderer, einen Drehteller, einen Schiebeförderer, einen Pusher, eine Wippe oder eine Fallklappe umfassen.

In einer zweiten Variante kann der Positionsförderer dazu ausgebildet sein, Artikel von einer Nullposition, an welcher die Artikel nach der Identifikationseinheit am Positionsförderer zu liegen kommen, über die zweite Position zur ersten Position zu verbringen. In der zweiten Variante kann der Positionsförderer ein einziges Förderband zum Verbringen der Artikel von der Nullposition zur ersten Position und zur zweiten Position aufweisen, wobei das Förderband dazu ausgebildet ist, Artikel an der ersten Position und an der zweiten Position zu stoppen. Bei diesem Positionsförderer ist es hinreichend, wenn das Förderband nur in eine Richtung bewegbar ist. In dieser Variante kann ein Artikel auf dem Weg zur ersten Position die zweite Position durchfahren.

Vorteilhafte und nicht einschränkende Ausführungsformen der Erfindung werden nachfolgend anhand der Zeichnungen näher erläutert.
Figur 1 zeigt eine erste Ausführungsform des erfindungsgemäßen Systems zur Vereinzelung und Identifizierung von Artikeln in einer schematischen Ansicht.
Figur 2 zeigt eine zweite Ausführungsform des erfindungsgemäßen Systems zur Vereinzelung und Identifizierung von Artikeln in einer schematischen Ansicht.
Figur 3 zeigt eine Perspektivansicht eines Teils des erfindungsgemäßen Systems.
Figur 4 zeigt eine weitere Perspektivansicht eines Teils des erfindungsgemäßen Systems.
Figur 5 ein durch das erfindungsgemäße System erzielbares Ablaufdiagramm bei der Vereinzelung von Artikeln.
Figur 6 zeigt eine dritte Ausführungsform des erfindungsgemäßen Systems zur Vereinzelung und Identifizierung von Artikeln in einer schematischen Ansicht, wobei der Positionsförderer nur in eine Richtung fördert.

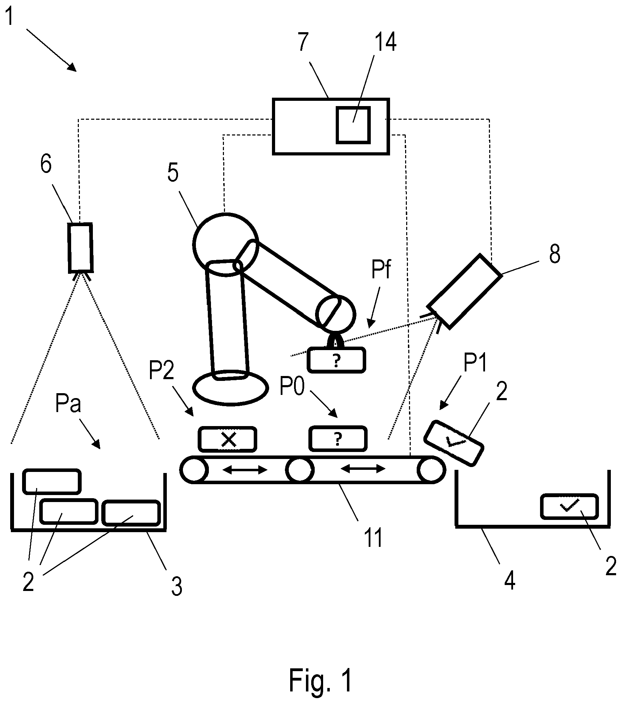

Figur 1 zeigt ein System zur Vereinzelung und Identifizierung von Artikeln 2. In diesem System 1 werden Artikel 2 beispielsweise in nicht weiter dargestellten Behältern auf einem zuführendem Förderelement 3 zugeführt und auf einem abführendem Förderelement 4 abgeführt. Die Artikel 2 sind auf dem Förderelement 3 an sich nicht identifiziert, jedoch kann diesen eine Chargennummer zugewiesen sein. Beispielsweise kann allen Artikeln 2 aus einem Behälter eine gemeinsame Chargennummer zugewiesen sein. Ziel ist es, dass die Artikel 2 auf das abführende Förderelement 4 verbracht werden und dort eindeutig identifiziert vorliegen, wobei den Artikeln 2 bevorzugt auch noch die Chargennummer zugewiesen sein kann.

Das zuführende Förderelement 3 und das abführende Förderelement 4 können beispielsweise jeweils Förderbänder sein, die elektromechanisch angetrieben sein können. Eines oder beide der Förderelemente 3, 4 können jedoch auch anders ausgestaltet sein und beispielsweise auch unangetrieben sein, wie z.B. eine Rollbahn für die Behälter der Artikel 2. So kann auch das zuführende Förderelement 3 in allgemeineren Ausführungsformen eine Quellposition sein, an welcher ein Wagen, insbesondere Einkaufswagen, oder ein D-Container positioniert werden kann. Die im Folgenden dargestellten Ausführungsformen sind zwar konkret für ein zuführendes Förderelement 3 erläutert, können jedoch genauso mit einer allgemeinen Quellposition umgesetzt werden, an welche die Artikel 2 oder Behälter manuell zugeführt werden.

Um die Artikel 2 vom zuführenden Förderelement 3 auf das abführende Förderelement 4 zu verbringen, wird eine Handhabungseinheit 5 eingesetzt, beispielsweise ein Roboter mit einem oder mehreren Greifarmen.

Damit die Handhabungseinheit 5 weiß, wo sich ein aufzugreifender Artikel 2 auf dem zuführenden Förderelement 3 befindet, wird eine Sensoreinheit 6 vorgesehen, die ein Blickfeld aufweist, in welchem sich die aufzugreifenden Artikel 2 auf dem zuführenden Förderelement 3 befinden. Die Sensoreinheit 6 ist beispielsweise eine Kamera und detektiert die Lage und/oder Position von Artikeln 2 am zuführenden Förderelement 3 und übergibt diese beispielsweise an eine die Handhabungseinheit 5 ansteuernde Steuereinheit 7 oder unmittelbar an die Handhabungseinheit 5. Die Auswertung der von der Sensoreinheit 6 aufgenommenen Bilder bzw. Daten kann auch durch die Steuereinheit 7 durchgeführt werden.

Sobald der Handhabungseinheit 5 die Position und/oder Lage der Artikel 2 am zuführenden Förderband 3 bekannt sind, kann diese den erkannten Artikel 2 aufgreifen, um diesen in Richtung des abführenden Förderelements 4 zu verbringen. Je nach Ausführungsform setzt die Handhabungseinheit 5 den Artikel 2 jedoch nicht unmittelbar auf das abführende Förderelement 4 auf, sondern gibt diesen bereits vorher an einer Freigabeposition Pf frei, wodurch der Artikel 2 durch die im Folgenden beschriebene Identifikationseinheit 8 fällt oder rutscht. Die Identifikationseinheit 8 ist in der Regel zwischen der Freigabeposition Pf der Handhabungseinheit 5 und dem abführenden Förderelement 4 angeordnet, kann aber auch auf diesem angeordnet sein. Üblicherweise gibt die Handhabungseinheit 5 den Artikel 2 bereits frei, bevor dieser in einen Erkennungsbereich der Identifikationseinheit 8 eintritt.

Die Identifikationseinheit 8 ist dazu ausgebildet, die Artikel 2 eindeutig zu identifizieren, worunter hierin das Zuweisen einer Produktbezeichnung, beispielsweise eine Modellnummer, oder auch das Zuweisen einer globalen Identifikation wie einer Seriennummer verstanden wird.

Zur Identifikation der Artikel 2 weist die Identifikationseinheit 8 einen oder mehrere Einzelsensoren 9 wie Kameras zur Aufzeichnung eines zwei- oder dreidimensionalen Bildes, Barcodelesern oder RFID-Lesern auf. Es versteht sich, dass verschiedene Typen von Einzelsensoren 9 kombinierbar sind. Die Artikel 2 selbst können, müssen aber nicht, ein Identifikationsmerkmal wie einen Barcode, einen QR-Code oder eine Modell- oder Seriennummer aufweisen, um das Identifizieren mittels der Identifikationseinheit 8 zu erleichtern. Weist der Artikel kein Identifikationsmerkmal auf oder kann dieses nicht gelesen werden, weil es verdeckt oder beschädigt ist, kann der Artikel 2 beispielsweise auch über optische Kameras anhand dessen Form, Größe, Farbe etc. identifiziert werden.

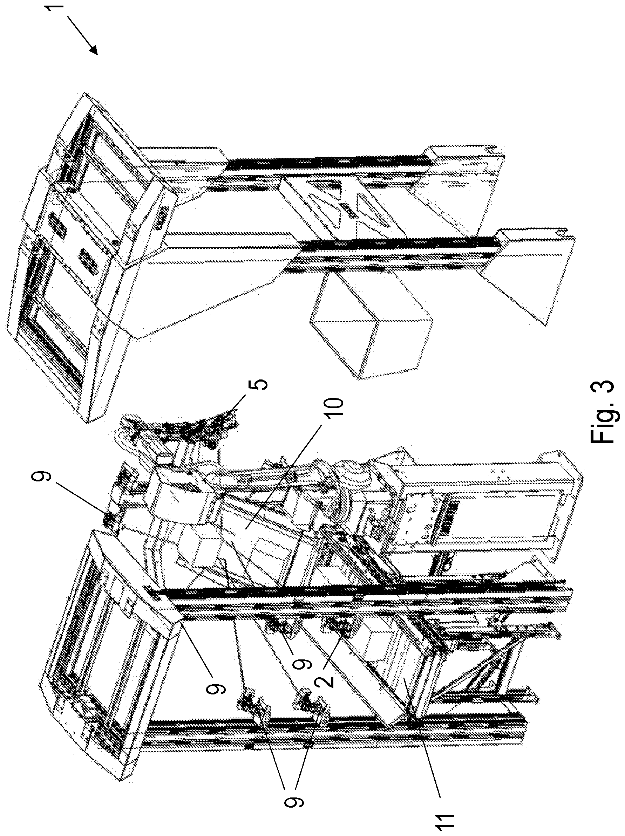

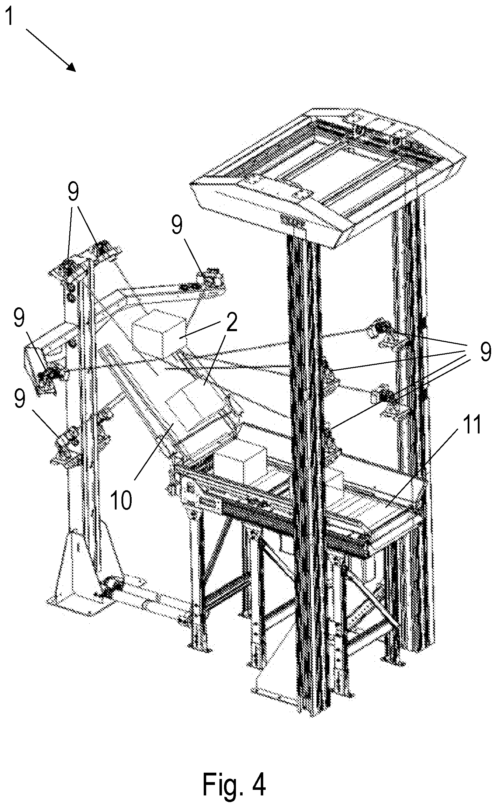

In den Ausführungsformen der Figuren 3 und 4 ist jeweils eine Identifikationseinheit 8 dargestellt, die über mehrere Einzelsensoren 9 verfügt, die einen Artikel 2 aus mehreren Richtungen aufnehmen. Dadurch ist es für die Identifikation nicht weiter relevant, auf welcher Seite des Artikels 2 das Identifikationsmerkmal angeordnet ist bzw. in welcher Lage der Artikel 2 an die Identifikationseinheit 8 übergeben wird. Alternativ oder zusätzlich können die mehreren Einzelsensoren 9 auch dazu eingesetzt werden, ein dreidimensionales Bild des Artikels 2 aufzunehmen und diesen dadurch zu identifizieren.

Um den Artikel 2 durch die Identifikationseinheit 8 zu verbringen, gibt die Handhabungseinheit 5 den Artikel 2 an der Freigabeposition Pf frei, d.h. lässt diesen los, sodass der Artikel 2 durch die Identifikationseinheit 8 fällt, rutscht oder auf eine andere Art durch diese verbracht wird. In einer Ausführungsform könnten die Freigabeposition Pf des Artikels 2 durch die Handhabungseinheit 5, die Identifikationseinheit 8 und die Position P0, auf welcher der Artikel 2 auf dem abführenden Förderelement 4 zu liegen kommt, entlang einer vertikalen Linie angeordnet sein, d.h. der Artikel 2 fällt frei durch die Identifikationseinheit 8.

In einer anderen Ausführungsform könnte die Identifikationseinheit 8 eine Rutsche 10 umfassen, wie beispielsweise in den Figuren 3 und 4 gezeigt. Die Handhabungseinheit 8 gibt den Artikel 2 in diesem Fall über der Rutsche 10 frei, sodass der Artikel 2 auf der Rutsche 10 durch die Identifikationseinheit 8 rutscht, dabei identifiziert wird und auf der Position P0 auf dem abführendem Förderelement 4 zu liegen kommt. Wenn eine Rutsche 10 zum Einsatz kommt, ist diese bevorzugt transparent, damit Einzelsensoren 9 der Identifikationseinheit 8 auch hinter bzw. unter der Rutsche 10 angeordnet werden können und den Artikel 2 somit auch von einer Position hinter bzw. unter der Rutsche 10 aufnehmen können.

Durch das Vorsehen von mehreren Einzelsensoren 9 ergibt sich üblicherweise eine Identifikationseinheit 8 mit einem räumlich ausgedehnten Erfassungsbereich mit einem Eingangsbereich und einem Ausgangsbereich. Wenn der Artikel 2 schwerkraftgetrieben durch die Identifikationseinheit 8 verbracht werden soll, d.h. wenn der Artikel 2 durch die Identifikationseinheit 8 fallen oder rutschen soll, ist der Eingangsbereich höher als der Ausgangsbereich angeordnet.

In den beiden vorgenannten Ausführungsformen wird der Artikel 2 somit schwerkraftgetrieben durch die Identifikationseinheit 8 verbracht. In wiederum anderen Ausführungsformen könnte die Handhabungseinheit 5 den Artikel 2 direkt auf dem abführenden Förderband 4 aufsetzen, danach von diesem durch die Identifikationseinheit 8 gefördert werden, wodurch der Artikel 2 hinter der Identifikationseinheit 8 auf der Position P0 zu liegen kommt.

Sobald der Artikel 2 durch die Identifikationseinheit 8 bewegt wurde, setzt dieser auf der genannten Position P0 auf einem Positionsförderer 11 auf, d.h. kommt dort kurz zur Ruhe oder wird unmittelbar weiterbewegt. Abhängig davon, ob der Artikel 2 von der Identifikationseinheit 8 identifiziert werden konnte oder nicht, wird dieser vom Positionsförderer 11 nun entweder zu einer ersten Position P1 oder zu einer davon beabstandeten zweiten Position P2 verbracht.

Konnte der Artikel 2 durch die Identifikationseinheit 8 identifiziert werden, wird der Artikel 2 zur ersten Position P1 gefördert. Die erste Position P1 kann als Ausgangsbereich für den nun vereinzelten und identifizierten Artikel 2 angesehen werden kann. Dem Verbringen von Artikeln 2 zur Position P1 können beispielsweise die folgenden Schritte nachfolgen: Ein positionsgesteuertes Transportieren auf ein Sortiersystem, insbesondere einen Taschensorter, ein positionsgesteuertes Ausschleusen auf Sammelbänder, insbesondere für eine Auftragskommissionisierung, oder eine positionsgesteuerte Aufnahme der Artikel in einen Produktspeicher bzw. in ein Produktkommissioniersystem wie beispielsweise aus der WO 2017/027897 bekannt.

Wenn der Artikel 2 nicht identifiziert werden konnte, wird dieser zur zweiten Position P2 bewegt. Die Position P2 ist in einem Griffbereich der Handhabungseinheit 5 angeordnet und kann somit von der Handhabungseinheit 5 wiederaufgenommen und nochmals für einen weiteren Identifikationsversuch durch die Identifikationseinheit 8 verbracht werden. Die Handhabungseinheit 5 ist somit dazu ausgebildet, Artikel 2 nicht nur vom zuführenden Förderelement 3 aufzunehmen, sondern auch von der zweiten Position P2. Die Handhabungseinheit 5 kann somit zumindest drei Positionen anfahren, nämlich eine Aufnahmeposition Pa am zuführenden Förderelement 4, die Freigabeposition Pf, an welcher der Artikel 2 von der Handhabungseinheit 5 losgelassen wird und durch die Identifikationseinheit 8 verbracht wird, und die zweite Position P2 zur Wiederaufnahme des Artikels 2, wenn dieser nicht identifiziert werden konnte. Die Handhabungseinheit 5 kann von jeder der drei Positionen aus die jeweils anderen anfahren und ist auf keine feste Abfolge beschränkt.

Die zweite Position P2 kann somit als Wiederaufnahmeposition für die Handhabungseinheit 5 angesehen werden. Die zweite Position P2 liegt beispielsweise am oder unmittelbar neben dem Positionsförderer 11 bzw. dem abführenden Förderelement 4 und insbesondere nicht am zuführenden Förderelement 3, sodass zu jeder Zeit eindeutig ist, welche Artikel 2 bislang noch nicht identifiziert werden konnten. Da die nicht identifizierbaren Artikel 2 nicht auf das zuführende Förderband 3 rückgeführt werden, wird ausgeschlossen, dass nicht identifizierbare Artikel 2 mit bislang unidentifizierten Artikeln 2 vermengt werden. Um die Chancen zu erhöhen, dass ein Artikel 2 nochmals nicht identifizierbar ist, kann die Handhabungseinheit 5 dazu ausgebildet sein, einen von der Position P2 aufgenommenen Artikel 2 in einer anderen Lage an der Freigabeposition Pf über der Identifikationseinheit 8 freizugeben als Artikel 2, die vom zuführenden Förderelement 3 aufgenommen wurden. Diese unterschiedlichen Lagen können zufällig gewählt sein oder für unterschiedliche Identifizierungsversuchswerte (z.B. erster Versuch, zweiter Versuch etc.) vorbestimmt sein.

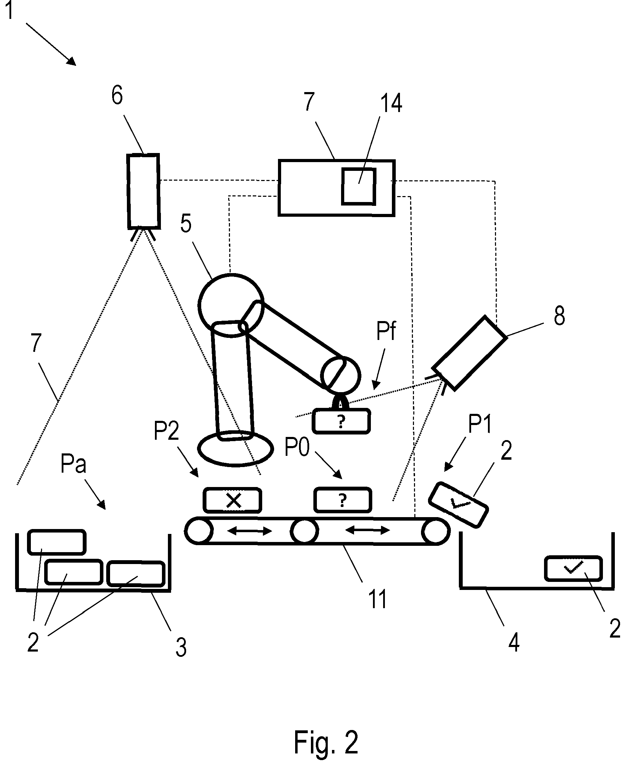

Der genannte Positionsförderer 11 kann vom abführenden Förderelements 4 gesondert sein, ein Teil des abführenden Förderelements 4 sein oder auch mit diesem übereinstimmen. Der Positionsförderer 11 kann wie in den Figuren 1 und 2 gezeigt durch ein Förderband gebildet sein, das in entgegengesetzte Richtungen bewegbar ist. In den Ausführungsformen der Figuren 3 und 4 ist der Positionsförderer 11 ein Förderband, das in eine Richtung bewegbar ist. Die erste und zweite Position P1, P2 sind zwei verschiedene Haltepositionen entlang einer linearen Wegstrecke. Der Positionsförderer 11 ist jedoch nicht auf diese Ausführungsformen beschränkt, sondern könnte auch als Scheibenförderer, Drehteller, Schiebeförderer, Pusher, Wippe oder Fallklappe ausgebildet sein.

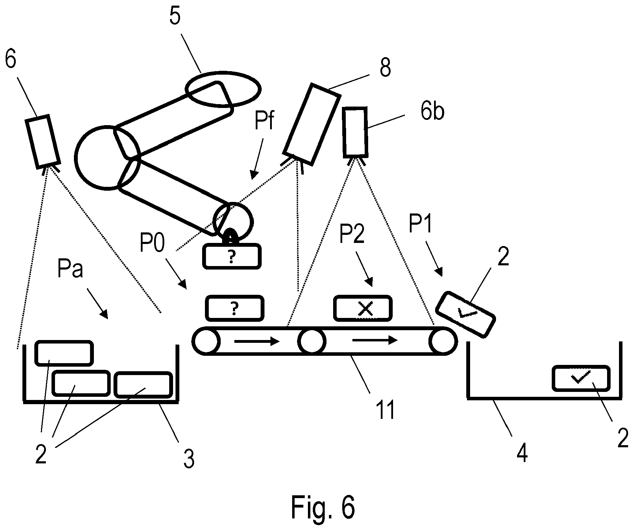

In einer Ausführungsform, die in Figur 1 gezeigt ist, hat die Sensoreinheit 6 ein Blickfeld, in dem nur die Aufnahmeposition am zuführenden Förderelement 3 liegt. In diesem Fall kann eine weitere, zweite Sensoreinheit 6b (Figur 6) vorgesehen sein, in deren Blickfeld die zweite Position P2 liegt. In einer dazu alternativen Ausführungsform, die in Figur 2 gezeigt ist, hat die Sensoreinheit 6 ein Blickfeld, in welchem sowohl die Aufnahmeposition Pa am zuführenden Förderelement 3 als auch die zweite Position P2 am Positionsförderer 11 liegt, wodurch nur eine einzige Sensoreinheit 6 notwendig ist.

Die genannte Steuereinheit 7 kann mit einer oder mehreren der folgenden Komponenten verbunden sein: Handhabungseinheit 5, Sensoreinheit 6, weitere Sensoreinheit, und Identifikationseinheit 8. Die Steuereinrichtung 7 kann als eigene Recheneinheit vorgesehen werden oder in einer der genannten Komponenten integriert sein. Die Steuereinheit 7 steuert die Handhabungseinheit 5 in Reaktion auf die von der Sensoreinheit 6, der weiteren Sensoreinheit, und der Identifikationseinheit 8 erhaltenen Daten an.

Die Steuereinheit 7 kann insbesondere einen Zähler 14 umfassen, um mitzuzählen, wie oft ein Artikel 2 durch die Identifikationseinheit 8 verbracht wurde. Dies ist möglich, dass zu jedem Zeitpunkt bekannt ist, ob die Handhabungseinheit 5 einen neuen Artikel von der Aufnahmeposition Pa oder einen bislang nicht identifizierbaren Artikel von der zweiten Position P2 aufgenommen hat. Der Zähler 14 kann einem nicht identifizierbaren Artikel 2 eine temporäre Identifikation zuweisen und einen Zählwert für Fehlidentifikationen jeweils um eins erhöhen, wenn dieser Artikel 2 wieder zur Position P2 verbracht oder von der Handhabungseinheit 5 an der zweiten Position P2 aufgenommen wird.

In der Steuereinheit 7 kann insbesondere eine Liste bzw. Datenbank geführt werden, in der jeder aufgenommene bzw. identifizierte oder nicht identifizierbare Artikel 2 verfolgt wird. Insbesondere kann dadurch eine Reihenfolge der auf das abführende Förderband 4 ausgegebenen identifizierten Artikel 2 bereitgestellt werden, sodass nachfolgenden Verarbeitungseinrichtungen mitgeteilt werden kann, welche Identifikation ein am abführenden Förderband 4 befindlicher Artikel 2 hat. In dieser Liste bzw. Datenbank kann auch die zu einem Artikel 2 zugehörige Chargennummer mitgeführt werden.

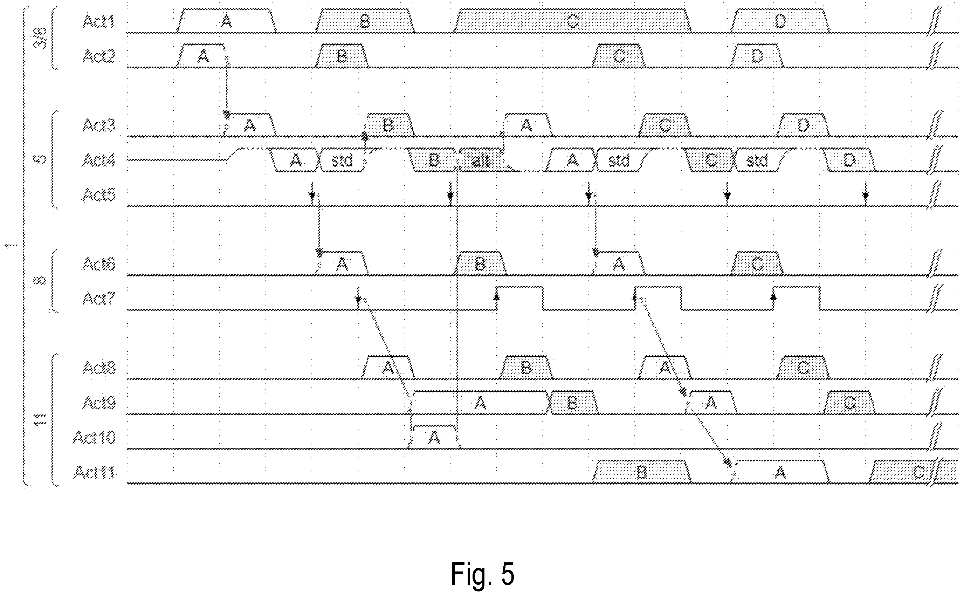

Die Funktionsweise des Systems 1 wird nun im Folgenden anhand von Figur 5 beschrieben. In einer ersten Handlung Act1 wird ein Behälter mit einem Artikel A zur Aufnahmeposition Pa am zuführenden Förderband 3 verbracht. In einer Handlung Act2 detektiert die Sensoreinheit 6 die Position und/oder Lage des Artikels A an der Aufnahmeposition Pa. In einer Handlung Act3 nimmt die Handhabungseinheit 5 den Artikel auf. In einer Handlung Act4 überführt die Handhabungseinheit 5 den Artikel A zur Freigabeposition Pf. In einer Handlung Act5 gibt die Handhabungseinheit 5 den Artikel A frei und lässt diesen beispielsweise durch den Identifikationssensor 8 fallen.

Ab diesem Zeitpunkt werden zwei Handlungsstränge parallel durchgeführt. Einerseits kann die Handhabungseinheit 5 wieder in der Handlung Act4 von der Freigabeposition Pf zur Aufnahmeposition Pa zurückverfahren, um dort in der Handlung Act3 einen Artikel B aufzunehmen der in der Zwischenzeit in der Handlung Act1 in einem neuen Behälter angeliefert wurde. Gleichzeitig fällt der Artikel A durch die Identifikationseinrichtung 8 und wird durch diese in einer Handlung Act6 gescannt und in der Handlung Act7 identifiziert. In der Handlung Act8 landet der Artikel A auf der Nullposition P0. In dem dargestellten Beispiel konnte der Artikel A nicht identifiziert werden und wird daher vom Positionsförderer 11 in der Handlung Act9 zur zweiten Position P2 bewegt.

Während der Positionsförderer 11 den Artikel A zur zweiten Position P2 bewegt, kann die Handhabungseinheit 5 bereits in der Handlung Act3 den Artikel B aufnehmen und in der Handlung Act4 zur Freigabeposition Pf verbringen. Währenddessen stellt die Sensoreinheit 6 bzw. die weitere, zweite Sensoreinheit in der Handlung Act10 bereits die Position und/oder Lage des Artikels A auf der zweiten Position P2 fest.

Nachdem die Handhabungseinheit 5 den Artikel B an der Freigabeposition Pf freigegeben hat, wird diese in der Handlung Act4 nicht zur Aufnahmeposition Pa bewegt, sondern zur zweiten Position P2, um dort den Artikel A in der Handlung Act3 abermals aufzunehmen. Vor dort verbringt die Handhabungseinheit 5 den Artikel A in der Handlung Act4 nochmals zur Freigabeposition Pf und gibt diesen dort frei. Während diese Handlungen von der Handhabungseinheit 5 durchgeführt wurden, ist der Artikel B bereits durch die Identifikationseinheit 8 gefallen, von dieser gescannt und identifiziert worden und auf der Nullposition P0 gelandet. In diesem Beispiel konnte der Artikel B identifiziert und in der Handlung Act11 vom Positionsförderer 11 von der Nullposition P0 zur ersten Position P1 verbracht werden, sodass das Verfahren für den Artikel B endet.

Während der Artikel B vom Positionsförderer 11 von der Nullposition P0 zur ersten Position verbracht wurde, ist der Artikel A durch die Freigabe der Handhabungseinheit 5 (welche sich danach unmittelbar zur Aufnahme eines neuen Artikels C zur Aufnahmeposition Pa zurückbewegte, da kein Artikel 2 an der zweiten Position P2 stand) durch die Identifikationseinheit 8 gefallen und konnte wie in Figur 5 dargestellt beim zweiten Versuch identifiziert und deshalb vom Positionsförderer von der Nullposition P0 zur ersten Position P1 verbracht werden.

Es ist ersichtlich, dass bei diesem Verfahren immer zwei Handlungsstränge parallel abgearbeitet werden, denn wenn sich die Handhabungseinheit 5 von der Freigabeposition Pf zur Aufnahmeposition Pa oder zur zweiten Position P2 bewegt, kann gleichzeitig ein Artikel 2 von der Identifikationseinheit 8 identifiziert und vom Positionsförderer 11 entsprechend zur korrekten Position verbracht werden.

Bei diesem Verfahren kann jeder Artikel 2 gesondert verfolgt werden und insbesondere kann auch eine Chargennummer, die durch einen Behälter des Artikels 2 auf dem zuführenden Förderelement 3 vorgegeben ist, mitverfolgt werden und beim Vereinzeln und Identifizieren mitgenommen werden. Die Chargennummer kann durch die Sensoreinheit 6 vom Behälter abgelesen werden und beispielsweise an die Steuereinheit 7 übermittelt werden. Die Steuereinheit 7 könnte die Chargennummer jedoch auch auf eine andere Art erhalten, beispielsweise über einen weiten Steuereingang. Selbst wenn somit ein Artikel 2 aus einem ersten Behälter, d.h. mit einer ersten Chargennummer, eingangs nicht identifizierbar ist und auf die zweite Position P2 verbracht wird, und ein weiterer Artikel 2 aus einem zweiten Behälter, d.h. mit einer zweiten Chargennummer von der Handhabungseinheit 5 nachgeführt wird, von der Identifikationseinheit 8 identifiziert wird und daher auf die erste Position verbracht wird, kann die Chargennummer für die Artikel 2 immer mitgeführt werden. In diesem Beispiel würde der zweite Artikel mit der zweiten Chargennummer den ersten Artikel mit der ersten Chargennummer überholen, da der erste Artikel nicht identifizierbar war und die Identifikationseinheit 8 zumindest ein weiteres Mal durchlaufen muss.

In weiteren, nicht dargestellten Ausführungsformen könnten auch mehrere zweite Positionen P2 vorgesehen sein, um mehrere nicht-identifizierbare Artikel 2 zur nochmaligen Aufnahme und Identifizierung bereitzuhalten. Alle der mehreren zweiten Positionen liegen im Griffbereich der Handhabungseinheit 5. Dadurch ist es auch möglich, dass die Handhabungseinheit 5 einen oder mehrere Artikel 2 auf den zweiten Positionen P2 warten lässt, um bislang unidentifizierte Artikel vom zuführenden Förderelement 3 aufzunehmen und identifizieren zu lassen.

Zudem kann der Positionsförderer 11 dazu ausgebildet sein, einen Artikel 2 auf eine dritte Position zu verbringen, wenn der Artikel 2 nach einer vorbestimmten Anzahl von Identifikationsversuchen nicht identifizierbar ist. Der Positionsförderer 11 erhält in diesem Fall eine entsprechende Anweisung vom Zähler 14 der Steuereinheit 7. Es können auch mehrere dritte Positionen vorgesehen werden, um mehrere Artikel 2 beiseite zu stellen. Auf der dritten Position befindliche Artikel 2 können aussortiert oder manuell identifiziert werden.

Figur 6 zeigt eine besonders praxisrelevante Ausführungsform, bei welcher der Positionsförderer 11 ein Förderband ist, welches nur in eine Richtung fördert. Der Artikel 2 kommt dabei auf einer Nullposition P0 am Förderband zu liegen. Konnte der Artikel 2 von der Identifikationseinheit 8 nicht erkannt werden, wird der Artikel 2 vom Förderband auf eine zweite Position P2 verbracht, wo der Artikel 2 zum Stillstand kommt, um von der Handhabungseinheit 5 nochmals aufgegriffen zu werden. Konnte der Artikel 2 von der Identifikationseinrichtung 8 jedoch identifiziert werden, wird der Artikel 2 von der Nullposition P0 über die zweite Position P2, wo der Artikel jedoch üblicherweise nicht zum Stillstand kommt, zur ersten Position P1 verbracht. Als erste Position P1 kann beispielsweise die Übergabestelle vom Positionsförderer 11 zum abführenden Förderband 6 angesehen werden oder aber auch eine Position am abführenden Förderband 6 oder am Positionsförderer 11 selbst.

Wie in Figur 6 dargestellt kann eine an der Decke montierte Handhabungseinheit 5 zum Einsatz kommen. Diese Ausführungsform ist jedoch nicht auf diese konkrete Anordnung beschränkt, sondern kann insbesondere auch in Kombination mit anderen Varianten zum Einsatz kommen.

## Patentansprüche

1. System (1) zur Vereinzelung und Identifizierung von Artikeln (2), umfassend:
eine Quellposition, umfassend bevorzugt ein zuführendes Förderelement, zum Bereitstellen von Artikeln (2), bevorzugt in Behältern,
ein abführendes Förderelement (4) zum Abführen von identifizierten, vereinzelten Artikeln (2),
eine Handhabungseinheit (5) zur Verbringung von Artikeln (2) von der Quellposition in Richtung des abführenden Förderelements (4),
eine Sensoreinheit (6) zur Detektion der Position und/oder Lage der Artikel (2) an der Quellposition, wobei die Handhabungseinheit (5) dazu ausgebildet ist, die Artikel von der Quellposition gemäß der von der Sensoreinheit (6) erkannten Position und/oder Lage aufzunehmen, und
eine Identifikationseinheit (8), die dazu ausgebildet ist, die von der Handhabungseinheit (5) in Richtung des abführenden Förderelements (4) verbrachten Artikel (2) zu identifizieren,
**dadurch gekennzeichnet, dass**
das abführende Förderelement (4) einen Positionsförderer (11) umfasst, welcher dazu ausgebildet ist, den Artikel (2) zu einer ersten Position (P1) zu fördern, wenn dieser von der Identifikationseinheit (8) identifiziert werden konnte, und den Artikel (2) zu einer zweiten Position (P2) zu fördern, wenn dieser von der Identifikationseinheit (8) nicht identifiziert werden konnte, wobei die Artikel (2) an der zweiten Position (P2) getrennt von den Artikeln (2) an der Quellposition vorliegen,
wobei die zweite Position (P2) in einem Griffbereich der Handhabungseinheit (5) angeordnet ist und die Handhabungseinheit (5) dazu ausgebildet ist, einen an der zweiten Position (P2) vorliegenden Artikel (2) nochmals aufzunehmen und über die Identifikationseinheit (8) zum Positionsförderer (11) zu verbringen.

2. System (1) nach Anspruch 1, wobei die Handhabungseinheit (5) dazu ausgebildet ist, den von der Quellposition aufgenommenen Artikel (2) an einer Freigabeposition (Pf) freizugeben, die in Bewegungsrichtung des Artikels (2) vor der Identifikationseinheit (8) liegt, und nach der Freigabe des Artikels (2) unmittelbar zur Aufnahme eines neuen Artikels (2) in Richtung der Quellposition zu verfahren, wenn sich kein Artikel (2) an der zweiten Position (P2) befindet, oder zur Aufnahme eines zuvor nicht identifizierbaren Artikels (2) zur zweiten Position (P2) zu verfahren, um diesen Artikel (2) aufzunehmen und abermals zur Identifikationseinrichtung (8) zu verbringen.

3. System (1) nach Anspruch 1 oder 2, wobei die Identifikationseinheit (8) einen räumlich ausgedehnten Erfassungsbereich mit einem Eingangsbereich und einen von diesem beabstandeten Ausgangsbereich aufweist, wobei der Eingangsbereich bevorzugt über dem Ausgangsbereich angeordnet ist.

4. System (1) nach einem der Ansprüche 1 bis 3, wobei die Handhabungseinheit (5), die Identifikationseinheit (8) und der Positionsförderer (11) derart zueinander angeordnet sind, dass ein von der Handhabungseinheit (5) freigegebener Artikel (2) durch die Identifikationseinheit (8) fällt oder rutscht und nach der Identifikationseinheit (8) auf einer Nullposition (P0) auf dem Positionsförderer (11) zu liegen kommt.

5. System (1) nach einem der Ansprüche 1 bis 4, wobei die Identifikationseinheit (8) zumindest einen Einzelsensor (9), bevorzugt zumindest zwei Einzelsensoren (9), aufweist, die beispielsweise ein oder mehrere unterschiedlich orientierte Kameras, Scanner oder RFID-Leser sind.

6. System (1) nach einem der Ansprüche 1 bis 5, umfassend eine Steuereinheit (7) mit einem Zähler (14), der dazu ausgebildet ist, die Anzahl der Identifikationsversuche von nicht identifizierbaren Artikeln (2) aufzuzeichnen.

7. System (1) nach Anspruch 6, wobei die Steuereinheit (7), der Positionsförderer (11) und/oder die Handhabungseinheit (5) dazu ausgebildet sind, einen nicht identifizierbaren Artikel (2) auf eine dritte Position zu verbringen oder diesem eine vorbestimmte Identifikation zuzuweisen, wenn die Anzahl der vom Zähler gezählten Identifikationsversuche einen vorbestimmten Wert erreicht.

8. System (1) nach einem der Ansprüche 1 bis 7, wobei die Handhabungseinheit (5) dazu ausgebildet ist, einen von der zweiten Position (P2) aufgenommenen Artikel (2) in einer anderen Lage an die Identifikationseinheit (8) freizugeben als Artikel (2), die von der Quellposition aufgenommen wurden.

9. System (1) nach einem der Ansprüche 1 bis 8, wobei die Sensoreinheit (6) ein Blickfeld hat, in welchem sich aufzunehmende Artikel (2) an der Quellposition befinden, wobei eine zweite Sensoreinheit (6b) vorgesehen ist, die ein zweites Blickfeld aufweist, in welchem die zweite Position (P2) liegt.

10. System (1) nach einem der Ansprüche 1 bis 8, wobei die Sensoreinheit (6) ein Blickfeld hat, in welchem sich sowohl aufzunehmende Artikel (2) an der Quellposition als auch die zweite Position (P2) am Positionsförderer (11) befinden.

11. System (1) nach einem der Ansprüche 1 bis 10, wobei der Positionsförderer (11) dazu ausgebildet ist, Artikel (2) von einer Nullposition (P0), an welcher die Artikel (2) nach der Identifikationseinheit (8) am Positionsförderer (11) zu liegen kommen, entweder zur ersten Position (P1) oder zur zweiten Position (P2) zu fördern.

12. System (1) nach Anspruch 11, wobei der Positionsförderer (11) ein einziges Förderband zum Verbringen der Artikel (2) von der Nullposition (P0) sowohl zur ersten Position (P1) als auch zur zweiten Position (P2) umfasst, wobei das Förderband in entgegengesetzte Richtungen bewegbar ist.

13. System (1) nach Anspruch 11, wobei der Positionsförderer (11) einen Scheibenförderer, einen Drehteller, einen Schiebeförderer, einen Pusher, eine Wippe oder eine Fallklappe umfasst.

14. System (1) nach einem der Ansprüche 1 bis 10, wobei der Positionsförderer (11) dazu ausgebildet ist, Artikel (2) von einer Nullposition (P0), an welcher die Artikel (2) nach der Identifikationseinheit (8) am Positionsförderer (11) zu liegen kommen, über die zweite Position (P2) zur ersten Position (P1) zu verbringen.

15. System (1) nach Anspruch 14, wobei der Positionsförderer (11) ein in nur eine Richtung förderndes Förderband zum Verbringen der Artikel (2) von der Nullposition (P0) zur ersten Position (P1) und zur zweiten Position (P2) aufweist, wobei das Förderband dazu ausgebildet ist, den Artikel (2) an der zweiten Position (P2) zu stoppen, wenn der Artikel (2) von der Identifikationseinheit (8) nicht identifiziert werden konnte, und von der Nullposition (P0) über die zweite Position (P2) zur ersten Position (P1) zu verbringen, wenn der Artikel (2) von der Identifikationseinheit (8) identifiziert werden konnte.

## Claims

1. System (1) for separating and identifying items (2), comprising:
a source position, preferably comprising a feeding conveyor element, for providing items (2), preferably in containers,
a discharging conveyor element (4) for discharging identified, separated items (2),
a handling unit (5) for transferring items (2) from the source position in the direction of the discharging conveyor element (4),
a sensor unit (6) for detecting the position and/or orientation of the items (2) at the source position, wherein the handling unit (5) is configured to pick up the items from the source position according to the position and/or orientation detected by the sensor unit (6), and
an identification unit (8) which is configured to identify the items (2) transferred by the handling unit (5) in the direction of the discharging conveyor element (4),
**characterised in that**
the discharging conveyor element (4) comprises a position conveyor (11) which is configured to convey the item (2) to a first position (P 1) if it was successfully identified by the identification unit (8) and to convey the item (2) to a second position (P2) if was not successfully identified by the identification unit (8), the items (2) at the second position (P2) being stored separately from the items (2) at the source position,
wherein the second position (P2) is arranged in a grip region of the handling unit (5) and the handling unit (5) is configured to pick up an item (2) present at the second position (P2) again and to transfer it to the position conveyor (11) via the identification unit (8).

2. The system (1) according to claim 1, wherein the handling unit (5) is configured to release the item (2) picked up from the source position at a release position (Pf) upstream of the identification unit (8) in the direction of movement of the item (2), and to move in the direction of the source position immediately after the item (2) has been released in order to pick up a new item (2), if there is no item (2) at the second position (P2), or to move to the second position (P2) to pick up a previously unidentifiable item (2) in order to pick up this item (2) and transfer it again to the identification unit (8).

3. The system (1) according to claim 1 or 2, wherein the identification unit (8) has a spatially extended detection area with an input area and an output area spaced apart therefrom, wherein the input area is preferably arranged above the output area.

4. The system (1) according to any one of claims 1 to 3, wherein the handling unit (5), the identification unit (8) and the position conveyor (11) are arranged relative to one another in such a way that an item (2) released by the handling unit (5) falls or slides through the identification unit (8) and comes to rest after the identification unit (8) at a zero position (P0) on the position conveyor (11).

5. The system (1) according to any one of claims 1 to 4, wherein the identification unit (8) comprises at least one individual sensor (9), preferably at least two individual sensors (9), which are, for example, one or more differently orientated cameras, scanners or RFID readers.

6. The system (1) according to any one of claims 1 to 5, comprising a control unit (7) with a counter (14) configured to record the number of identification attempts of unidentifiable items (2).

7. The system (1) according to claim 6, wherein the control unit (7), the position conveyor (11) and/or the handling unit (5) are configured to move an unidentifiable item (2) to a third position or to assign it a predetermined identification when the number of identification attempts counted by the counter reaches a predetermined value.

8. The system (1) according to any one of claims 1 to 7, wherein the handling unit (5) is designed to release an item (2) picked up from the second position (P2) to the identification unit (8) in a different position than items (2) picked up from the source position.

9. The system (1) according to any one of claims 1 to 8, wherein the sensor unit (6) has a field of view in which items (2) to be picked up are located at the source position, wherein a second sensor unit (6b) is provided, which has a second field of view in which the second position (P2) is located.

10. The system (1) according to any one of claims 1 to 8, wherein the sensor unit (6) has a field of view in which both items (2) to be picked up at the source position and the second position (P2) on the position conveyor (11) are located.

11. The system (1) according to any one of claims 1 to 10, wherein the position conveyor (11) is configured to convey items (2) from a zero position (P0), at which the items (2) come to rest after the identification unit (8) on the position conveyor (11), either to the first position (P1) or to the second position (P2).

12. The system (1) according to claim 11, wherein the position conveyor (11) comprises a single conveyor belt for moving the items (2) from the zero position (P0) to both the first position (P1) and the second position (P2), wherein the conveyor belt is movable in opposite directions.

13. The system (1) according to claim 11, wherein the position conveyor (11) comprises a disc conveyor, a turntable, a sliding conveyor, a pusher, a rocker or a drop flap.

14. The system (1) according to any one of claims 1 to 10, wherein the position conveyor (11) is configured to convey items (2) from a zero position (P0), at which the items (2) come to rest after the identification unit (8) on the position conveyor (11), via the second position (P2) to the first position (P1).

15. The system (1) according to claim 14, wherein the position conveyor (11) has a conveyor belt conveying in only one direction for moving the items (2) from the zero position (P0) to the first position (P1) and to the second position (P2), wherein the conveyor belt is designed to stop the item (2) at the second position (P2) if the item (2) could not be identified by the identification unit (8), and to transfer it from the zero position (P0) via the second position (P2) to the first position (P1) if the item (2) could be identified by the identification unit (8).

## Revendications

1. Système (1) de séparation et d'identification d'articles (2), comprenant
une position source comprenant de préférence un élément transporteur d'amenée, pour la préparation d'articles (2), de préférence dans des conteneurs,
un élément transporteur d'évacuation (4) pour l'évacuation d'articles (2) séparés et identifiés,
une unité de manutention (5) pour le transfert d'articles (2) depuis la position source en direction de l'élément transporteur d'évacuation (4),
une unité de détection (6) pour la détection de la position et/ou de l'orientation des articles (2) sur la position source, l'unité de manutention (5) étant configurée pour réceptionner les articles de la position source en fonction de la position et/ou de l'orientation détectées par l'unité de détection (6), et
une unité d'identification (8) qui est configurée pour identifier les articles (2) transférés par l'unité de manutention (5) en direction de l'élément transporteur d'évacuation (4), **caractérisé en ce que**
l'élément transporteur d'évacuation (4) comporte un transporteur de positionnement (11) qui est configuré pour transporter l'article (2) jusqu'à une première position (P1) si celui-ci a pu être identifié par l'unité d'identification (8) ou jusqu'à une deuxième position (P2) si celui-ci n'a pas pu être identifié par l'unité d'identification (8), les articles (2) sur la deuxième position (P2) étant séparés des articles (2) sur la position source,
la deuxième position (P2) étant agencée à portée de l'unité de manutention (5) et l'unité de manutention (5) étant configurée pour réceptionner à nouveau un article (2) se trouvant sur la deuxième position (P2) et pour le transporter jusqu'au transporteur de positionnement (11) par l'intermédiaire de l'unité d'identification (8).

2. Système (1) selon la revendication 1, dans lequel l'unité de manutention (5) est configurée pour libérer l'article (2) réceptionné depuis la position source sur une position de libération (Pf) qui se trouve en amont de l'unité d'identification (8) dans la direction de déplacement de l'article (2), et pour procéder indirectement, après la libération de l'article (2), à la réception d'un nouvel article (2) en direction de la position source si aucun article (2) ne se trouve sur la deuxième position (P2), ou pour procéder à la réception d'un article (2) précédemment non identifiable sur la deuxième position (P2), afin de réceptionner cet article (2) et de le transporter à nouveau jusqu'au dispositif d'identification (8).

3. Système (1) selon la revendication 1 ou 2, dans lequel l'unité d'identification (8) comporte une zone de détection étendue dans l'espace avec une zone d'entrée et une zone de sortie éloignée de celle-ci, la zone d'entrée étant de préférence disposée au-dessus de la zone de sortie.

4. Système (1) selon une des revendications 1 à 3, dans lequel l'unité de manutention (5), l'unité d'identification (8) et le transporteur de positionnement (11) sont disposés de telle sorte les une par rapport aux autres qu'un article (2) libéré par l'unité de manutention (5) tombe à travers l'unité d'identification (8) ou vient se placer en aval de l'unité d'identification (8) sur une position zéro (P0) sur le transporteur de positionnement (11).

5. Système (1) selon une des revendications 1 à 4, dans lequel l'unité d'identification (8) comporte au moins un détecteur individuel (9), de préférence au moins deux détecteurs individuels (9), qui est/sont par exemple un(e) ou plusieurs caméras, scanners ou lecteurs RFID orienté(e)s différemment.

6. Système (1) selon une des revendications 1 à 5, comprenant une unité de commande (7) avec un compteur (14) qui est configuré pour enregistrer le nombre de tentatives d'identification d'articles (2) non identifiables.

7. Système (1) selon la revendication 6, dans lequel l'unité de commande (7), le transporteur de positionnement (11) et/ou l'unité de manutention (5) sont configurés pour transporter un article (2) non identifiable jusqu'à une troisième position ou pour attribuer à celui-ci une identité prédéfinie si le nombre de tentatives d'identification comptées par le compteur atteint une valeur prédéfinie.

8. Système (1) selon une des revendications 1 à 7, dans lequel l'unité de manutention (5) est configurée pour libérer un article (2) réceptionné depuis la deuxième position (P2) dans une autre orientation dans l'unité d'identification (8) que les articles (2) qui ont été réceptionnés depuis la position source.

9. Système (1) selon une des revendications 1 à 8, dans lequel l'unité de détection (6) possède un champ visuel dans lequel se trouvent des articles (2) se réceptionnant au niveau de la position source et dans lequel il est prévu une deuxième unité de détection (6b) qui présente un deuxième champ visuel dans lequel se trouve la deuxième position (P2).

10. Système (1) selon une des revendications 1 à 8, dans lequel l'unité de détection (6) possède un champ visuel dans lequel se trouvent à la fois des articles (2) à réceptionner sur la position source et la deuxième position (P2) sur le transporteur de positionnement (11).

11. Système (1) selon une des revendications 1 à 10, dans lequel le transporteur de positionnement (11) est configuré pour transporter des articles (2) depuis une position zéro (P0) sur laquelle les articles (2) viennent se placer en aval de l'unité d'identification (8) sur le transporteur de positionnement (11) jusqu'à la première position (P1) ou jusqu'à la deuxième position (P2).

12. Système (1) selon la revendication 11, dans lequel le transporteur de positionnement (11) comporte une seule bande transporteuse pour transférer les articles (2) depuis la position zéro (P0) aussi bien jusqu'à la première position (P1) que jusqu'à la deuxième position (P2), cette bande transporteuse pouvant se déplacer dans des directions opposées.

13. Système (1) selon la revendication 11, dans lequel le transporteur de positionnement (11) comporte un transporteur à disque, un plateau tournant, un transporteur coulissant, un poussoir, une bascule ou une trappe.

14. Système (1) selon une des revendications 1 à 10, dans lequel le transporteur de positionnement (11) est configuré pour transporter des articles (2) depuis une position zéro (P0) sur laquelle les articles (2) viennent se placer après l'unité d'identification (8) sur le transporteur de positionnement (11) jusqu'à la première position (P1) en passant par la deuxième position (P2).

15. Système (1) selon la revendication 14, dans lequel le transporteur de positionnement (11) comporte une bande transporteuse se déplaçant dans une seule direction pour transférer les articles (2) depuis une position zéro (P0) jusqu'à la première position (P1) et jusqu'à la deuxième position (P2), cette bande transporteuse étant configurée pour arrêter les articles (2) sur la deuxième position (P2) si les articles (2) n'ont pas pu être identifiés par l'unité d'identification (8) et pour les transférer depuis la position zéro (P0) jusqu'à la première position (P1) en passant par la deuxième position (P2) si les articles (2) ont pu être identifiés par l'unité d'identification (8).
